# EUROPEAN PATENT APPLICATION

(11) **EP 1 324 546 A1**
(43) Date of publication of application: **02.07.2003**
(21) Application number: 01403387.2
(22) Date of filing: 28.12.2001
(51) Int. Cl.: H04L 12/56

(54) **Dynamic content delivery method and network**

(71) Applicant: MOTOROLA, INC., Schaumburg, IL 60196 (US)
(72) Inventor: Mokhtar, Ahmed, 35700 Rennes (FR); Catalina Gallego, Miguel, 75014 Paris (FR); Lach, Hong-Yon, 94220 Charento Le Pont (FR)
(74) Representative: Wharmby, Martin Angus

(57) **Abstract**

A data network (100, 200, 300) for dynamically delivering data content to a client (112), includes a core network (110); a server (150) having data content stored therein; and a plurality of distributed delivery members (130, 140) to facilitate communication to the client (112). In response to receiving a data content request from the client (112) a tracker (155) requests a number of subtrackers (135, 145) to calculate a network distance from a respective delivery member (130, 140) to the client (112) to determine a preferred candidate delivery member (130, 140) to deliver the requested data content to the client (112).

In this manner, an improved QoS-based data content delivery mechanism is provided that reduces network latency and is preferably adaptable to network loading.

## Description

### Field of the Invention

This invention relates to content delivery in data networks, and in particular to providing a certain quality of service in data content delivery.

### Background of the Invention

Present day communication systems, both wireless and wire-line, have a requirement to transfer data between communication units. Data, in this context, includes many forms of communication such as speech, multimedia, signalling communication, etc. Such data communication needs to be effectively and efficiently provided for, in order to optimise use of limited communication resources.

For data to be transferred across data communication networks, a communication unit addressing protocol is required. The communication units are generally allocated addresses that are read by a communication bridge, gateway and/or router, in order to determine how to transfer the data to the addressed unit. The interconnection between networks is generally known as internetworking (or internet).

Networks are often divided into sub-networks, with protocols being set up to define a set of rules that allow the orderly exchange of information. Currently, the two most popular protocols used to transfer data in communications systems are: Transmission Control Protocol (TCP) and Internet Protocol (IP). The IP portion corresponds to data transfer in the network layer of the well-known OSI model and the TCP portion to data transfer in the transport layer of the OSI model. Their operation is transparent to the physical and data link layers and can thus be used on any of the standard cabling networks such as Ethernet, FDDI or token ring.

In the field of this invention it is known that the delay in delivering all forms of data, often termed content delivery, is a primary focus of content providers and service providers in providing an efficient and effective data delivery service to their customers.

It is well known that an increasing amount of data traffic over a core portion of a data network leads to a data overload in the network and an undesirable, excessive consumption of bandwidth. To avoid such overload problems, many caching techniques have been introduced. Such techniques have been developed and enhanced to include inter-caching solutions using inter-caching communication protocols.

Caching techniques tend to address a quality of service (QoS) problem, from the client/customer perspective. Caching is transparent for the data server but not transparent from the client ISPs. It has been found that caching and inter-caching communication protocols do not solve the problem of data overload and excessive consumption of bandwidth. There are always inherent problems with caching, a document's lifetime, which protocol to use, etc. In addition, how often and when to perform cache refreshing is also an issue.

Thus, in order to address the QoS problem, mirroring solutions are widely deployed in the Internet. They consist of a series of mirror sites in which the data contents are distributed. Basically, the content of the main server is duplicated in a set of mirror servers in different network locations. The mirror servers periodically update their content with the main server in off-peak hours. When the user connects to the main server a list of the mirror servers is presented to him, and the user can select the mirror server that is closest to the user instead of the main server.

With such a mirroring approach, a user is able to decide which mirror server to use. However, the user does not know the network topology, and usually chooses the mirror server that is geographically nearest. Such a selection does not necessarily mean that it is the nearest server from a 'network' topology perspective, where the number of routers or gateways in the communication path is a critical factor. Furthermore, the user has no indication of the network or respective server's load. Also, the onus is on each mirror server to be responsible for updating its data content, so it must periodically verify if the main server content has changed. Hence, the rate at which a mirror server updates its data content is used as a trade-off against the subsequent effect on increasing the network load.

Content delivery (data) networks (CDNs) are an evolution of the basic mirroring solution. Within the context of CDN, a known solution to the QoS problem is Akamai, details of which can be found at www.akamai.com. The Akamai technique is a client-side solution. In Akamai the content to be distributed is mirrored in a series of mirror servers. When the user sends a request for data, his source domain name server (DNS) address is verified against a static database, and the request is directed to a mirror site. The mirror site is selected based on the DNS address of the user. DNS domains are grouped, and each group is directed to a different mirror site.

However this method does not guarantee that the closest mirror site is selected, since a DNS domain structure is not necessarily related to IP network topology. Two hosts sharing the same DNS domain may be very far from each other in the IP topology point of view.
Furthermore, Akamai does not take into account the network load or the mirror site load. Each mirror site is statically mapped to a group of DNS domains.

US5991306 "Pull based, intelligent caching system and method for delivering data over a network" describes a further client-based technique that addresses the QoS problem in Content Delivery. In this patent, a network system includes a content provider connected to local service providers via an interactive distribution network, such as the Internet. The local service providers facilitate delivery of the data content from the content provider to multiple subscribers. The local service providers schedule delivery of frequently requested content from the content provider, prior to a peak time when the subscribers are likely to request the data content. The data content is downloaded from the content provider during off-peak hours and cached at the local service providers to serve the service providers' subscribers during the subsequent peak-time.

In this manner, the frequently requested data content is already present at the local service providers and ready to be served to the subscribers before they actually request it. When the data content is finally requested, the data is streamed continuously in real-time for "just-in-time" rendering at the subscriber unit. Another aspect of this patent involves supplementing content delivery over the Internet with delivery of content over a secondary network, such as a broadcast satellite network. The supplemental broadcast link offers additional bandwidth at a fraction of the cost that would be incurred if the local service provider installed additional Internet connections, such as T1 or T3 connections.

In US5991306, the user will only benefit from the additional QoS if his/her local service provider supports this system and provides the dynamic caches. In addition, the load of the cache systems or the local service provider network is not taken into account when the user accesses the network.

US5944795 - "Client-server architecture using Internet and guaranteed quality of service networks for accessing distributed media sources" describes another client-based technique that aims to address the QoS problem in Content Delivery. In this patent, a client-server architecture utilises the advantages of known QoS networks to provide a guaranteed quality of service, security, and a charge mechanism for handling requests initiated over a packet-based data network, such as the Internet, for access to distributed media sources. Such media sources may be independent of the QoS network provider and may be located by browsing the Internet.

It will appear to the average user that the Internet and the QoS network are fused together. Thus, when a user, connected to the Internet, selects an application that requires functionality offered by the telephone network, such as a guaranteed QoS delivery of media information or customised billing, the Internet-resident application will communicate information to a server. The server will, in turn, initiate a session over the QoS network for delivery of the required information to the client. Such an Internet session will use client information transmitted from the client (or from the application) to the server.

This solution relies on guaranteed QoS networks. The QoS model is based on CDN to provide a static QoS by means of Normal methods such as cooperative caching and so on align with a security model.

A need therefore exists for an improved data content allocation/delivery mechanism wherein the abovementioned disadvantages associated with prior art arrangements may be alleviated.

### Statement of Invention

In accordance with a first aspect of the present invention, there is provided a data network for dynamically delivering data content to a client, as claimed in Claim 1.

In accordance with a second aspect of the present invention, there is provided a storage medium storing processor-implementable instructions, as claimed in Claim 21.

In accordance with a third aspect of the present invention, there is provided a method of delivering data content to a client, as claimed in Claim 22.

In accordance with a fourth aspect of the present invention, there is provided a server, as claimed in Claim 37.

In accordance with a fifth aspect of the present invention, there is provided a delivery member, as claimed in Claim 38.

In accordance with a sixth aspect of the present invention, there is provided a tracker, as claimed in claim 39.

In accordance with a seventh aspect of the present invention, there is provided a publisher, as claimed in Claim 40.

In accordance with an eighth aspect of the present invention, there is provided an information database, as claimed in claim 41.

In accordance with a ninth aspect of the present invention, there is provided a subtracker, as claimed in claim 42.

Further aspects of the present invention are as claimed in the dependent claims.

In summary, the inventive concepts of the present invention provide for a QoS-based distributed network. The QoS-based distributed network enhances the quality of service using, preferably, an application level intelligent protocol installed in a new dynamic delivery network architecture. A data network for dynamically delivering data content to a client includes a core network for routing communication to and/or from the client, a server and a plurality of distributed delivery members, operably coupled to the core network.

A tracker is contained within, or operably coupled to, the server. One or more subtracker(s) is/are contained within, or operably coupled to, the plurality of distributed delivery members. In response to receiving a data content request by the client the tracker requests a number of the subtrackers to calculate a network distance from a respective delivery member to the client to determine a preferred candidate delivery member to deliver said requested data content to said client.

In this manner, the server selects the preferred candidate delivery member, which effectively improves the quality of service of the data content delivery process. The proposed solution is completely transparent from any client ISPs but not transparent from the server.

### Brief Description of the Drawings

Exemplary embodiments of the present invention will now be described, with reference to the accompanying drawings, in which:
FIG. 1 illustrates a functional block diagram of an application level QoS architecture with dynamic content allocation/delivery, in accordance with a preferred embodiment of the present invention;
FIG. 2 illustrates a functional block diagram of a client request example, in accordance with the preferred embodiment of the present invention;
FIG. 3 illustrates a functional block diagram of the content delivery in response to the client request, in accordance with the preferred embodiment of the present invention;
FIG. 4 illustrates a flowchart of a tracker functionality method, in accordance with a preferred embodiment of the present invention;
FIG. 5 illustrates a flowchart of a publisher functionality method, in accordance with a preferred embodiment of the present invention; and
FIG. 6 illustrates a flowchart of a subtracker functionality method, in accordance with a preferred embodiment of the present invention.

### Description of Preferred Embodiments

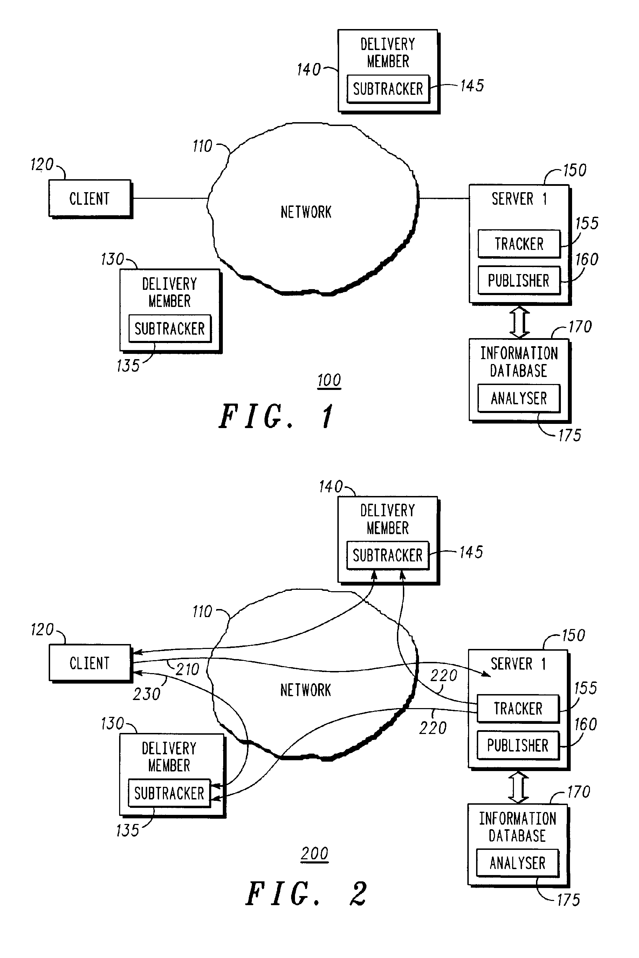

Referring first to FIG. 1, a functional block diagram of an application level QoS architecture 100 is illustrated, in accordance with the preferred embodiment of the present invention. The application level QoS architecture includes a dynamic content allocation/delivery mechanism. In summary, the QoS-based distributed network enhances the quality of service using an application level intelligent protocol.

Figure 1 shows a core network 110 of the proposed application level QoS-based architecture 100. The core network 110 is operably coupled to a client 120, which for the purpose of the present invention may be considered a standard client, with no additional protocol or process running thereon.

The core network 110 is also operably coupled to a server 150, which contains the data content that is to be distributed. The data content may be provided by a separate content provider (CP). In addition to the data server running the appropriate protocol there are two additional processes running on the server, namely:
(i) A Tracker 155 that is responsible for receiving a client request and re-directing it to the best candidate (BC) server, which is basically the delivery member 130, 140 that is best suited to answer or re-direct a client request. The decision on the BC delivery member is preferably based on the data registered in an Information database 170 relating to that delivery member or from feed back from the delivery member's 130, 140 sub-tracker 135, 145; and
(ii) A Publisher 160 that is responsible for keeping the contents of the Delivery Members (130, 140) up-to-date.

The core network 110 is preferably coupled to a number of delivery members 130, 140 (with only two delivery members shown for clarity purposes only). The delivery members 130, 140 are secondary servers that contain a copy (or portion) of the data present in the (primary) server 150. The Publisher process 160 in the Server 150 maintains up-to-date data in the Delivery Members 130, 140.

Each Delivery Member 130, 140 is configured to run an additional process, namely a Sub-Tracker process 135, 145. The Sub-Tracker process 135, 145, in response to a request by the Tracker 155, calculates the 'network distance' (ND) to the client 120 and sends the result to the Tracker 155. The Network Distance is the distance between the delivery member 130 and the client 120. The particular metrics employed to measure this distance may vary depending upon the network type and protocols. One example would be to perform a round-trip time (RTT) measurement, which is the time it takes for a packet to travel from a source node to a destination node and back to the source node. A further example would be to measure the number of hops, gateways or routers between source and destination nodes in the communication path.

The server 150 is preferably operably coupled to an Information database (IB) 170, which is a database that tracks the client addresses and information on the delivery members 130, 140 that are associated to them.

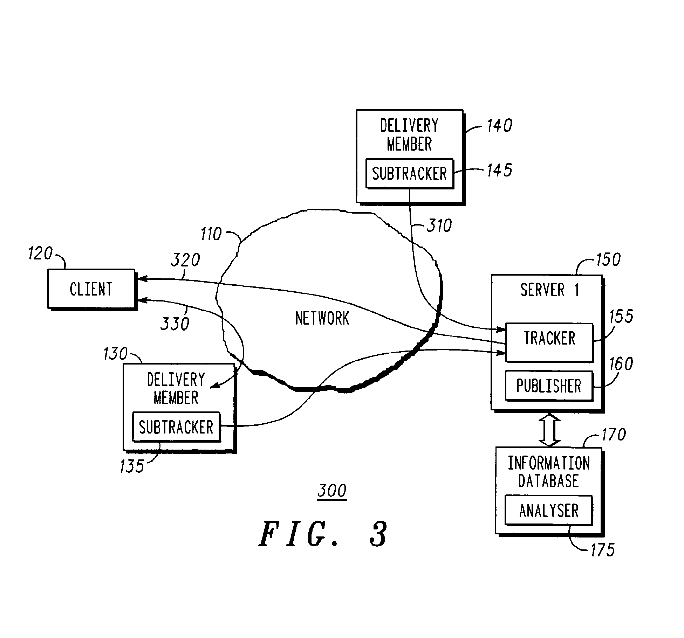

The preferred mechanism for a server to answer a client request (CR), utilising the application level QoS architecture 100 of FIG. 1, are described in greater detail with respect to FIG. 2 and FIG.3. In particular, FIG. 2 illustrates a functional block diagram 200 of a client request example, in accordance with the preferred embodiment of the present invention.

The client 120 makes a request (CR) 210 to the server 150 via the core network 110. Let us assume that the CR is a standard request, with no change to any protocol being used.

The tracker 155 in the server 150 receives the request 210. From the CR 210, the tracker 155 extracts the client address and searches 180 the Information database 170 for information on that particular client 120. If no data is found on that particular client 120, the Information database 170, or the tracker 155, transmits one or more queries 220 to the Subtracker(s) 135, 155 of the Delivery Members 130, 140 known to be closest (in a network and/or geographical perspective) to the client. It is envisaged that the query 220 may be sent using a multicast protocol in order to minimise any impact on the network load.

Each Subtracker 135, 145 measures 230 the Network Distance to the client 120. It is envisaged that each subtracker 135, 145 uses the same metrics for the Network Distance calculation, so that the delivery member 130, 140/subtracker 135, 145 *'nearest'* the client 120 can be determined. Preferably, the data packets that are used to measure this distance are set with a low time-to-live (TTL) value, so that only the Subtrackers that are near the client receive the packet back in order to determine the ND. The TTL value is a field used by the Internet Protocol (IP) to define the packet lifetime (with respect to the number of routers the packet is processed by). In this manner, the subtracker 135, 145 nearest the client 120 can be determined.

Referring now to FIG. 3, the functional block diagram of the preferred content delivery 300 is illustrated, in accordance with the preferred embodiment of the present invention. In response to the Network Distance measurement 230 to the client 120, as determined by the subtracker 135, 145, the respective subtracker(s) report(s) the ND measurement 330 to the tracker 155.

The tracker 155 analyses the received information, updates the information database 170, and selects a preferred delivery member 130 to answer the client request. In the preferred embodiment of the present invention, the decision algorithm takes into account the (geographical and/or network) distance between the client 120 and each delivery member 130, 140 as well as the load of each delivery member 130, 140. It is within the contemplation of the invention that a separate protocol may be used to exchange delivery member load information. When the server 150 has selected the best candidate delivery member 130, the tracker 155 re-directs the client 120 to use that delivery member 130. In this manner, the client 120 is provided with the ability to retrieve the desired data content from the delivery member 130, at the best QoS available to that client.

It is envisaged that further client requests from that particular client may be re-directed to the appropriate delivery member 130 without the need to re-calculate the ND, which has been preferably saved on the Information database 170.

In summary, the application level QoS architecture 100 consists of three new elements, the tracker 155, the at least one content delivery member 130, 140 having a subtracker 135, 155, and the Information database 170.

More generally, the above elements may be implemented in the respective communication units in any suitable manner. For example, new apparatus may be added to a conventional communication unit, or alternatively existing parts of a conventional communication unit may be adapted, for example by reprogramming one or more processors therein. As such, the required implementation (or adaptation of existing unit(s)) may be implemented in the form of processor-implementable instructions stored on a storage medium, such as a floppy disk, hard disk, PROM, RAM or any combination of these or other storage multimedia.

In the case of other network infrastructures, wireless or wireline, implementation of the processing operations may be performed at any appropriate node such as any other appropriate type of server, database, gateway, etc. Alternatively, the aforementioned steps may be carried out by various components distributed at different locations or entities within any suitable network or system.

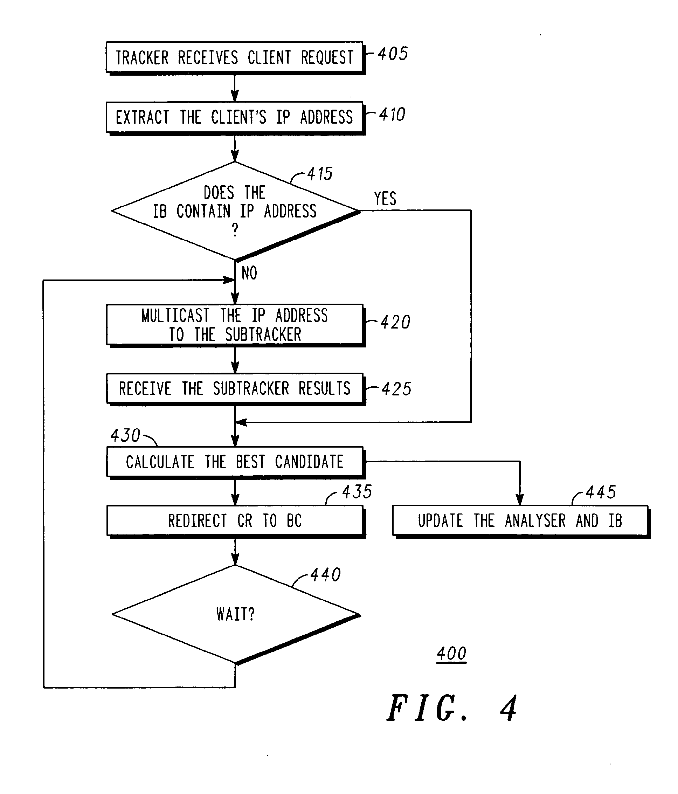

Referring now to FIG. 4, a flowchart 400 of a tracker functionality method is illustrated, in accordance with the preferred embodiment of the present invention. The tracker 155 is installed in the server of the content provider and preferably implemented as a processor.

The tracker 155 receives a data content request from a client, as in step 405, and processes the CR to determine/extract the Client's IP Address (ECIPA), as shown in step 410. In order to optimise the extraction process, the preferred embodiment takes into consideration the sub-net address topology, such that a sub-net address is the target. However, in this case, it is envisaged that the IB's intelligence may play a role in re-grouping the ECIPA addresses with the same sub-net address, and/or the same best candidate selections.

Optionally, the tracker may then perform a Test Publisher Precautions (TPP) process. This process may be introduced to avoid any transitional period between receiving a client request for a document and publishing that document. The TPP process preferably indicates that there is a non-published document within the CR documents. It is also envisaged that such a TPP process may be performed in parallel to other processes, such as searching a simplified IB sub-set.

The tracker 155 then searches its associated IB, in step 415, to determine whether the IB contains information on that particular client 120. If an IB sub-set is used, or a TPP process is performed, searching of an IB to find the best candidate to re-direct the request is preferably performed after the TPP process and/or testing a local IB sub-set.

If the IB contains information on that particular client 120 in step 415, it selects the best candidate in step 430. If no data is found relating to (the IP address of) that particular client 120, in step 415, the Information database 170 transmits one or more multicast query messages as shown in step 420. It is within the contemplation of the invention that any number of other message types or formats could be used to convey the ND measurement request to the subtracker(s).

This process asks the sub-tracker to return information concerning the distance/delay between the client and the sub-tracker/delivery member. It is envisaged that RTT and/or TTL or any other indicators may also be used to streamline the process of determining the best candidate. In this regard, the one or more subtracker(s) 135, 155 transmit(s) one or more data packets to, and receives a response back from, the client to determine the ND, for example by calculating the transmission delay.

The subtracker(s) 135, 145 then transmit(s) the ND information to the (primary) server, where the results are received, in step 425, and the best candidate delivery member selected, as shown in step 430.

The tracker 155 then forwards (re-directs) the client request to the best candidate sub-tracker/delivery member, as shown in step 435. Application level re-direction is a simple example of such re-direction. Concurrently, or subsequently, the tracker 155 also informs its associated information database 170 of the results from the sub-trackers, as shown in step 445.

In an alternative embodiment of the present invention, it is envisaged that the tracker (or sub-trackers) may maintain a sub-set of the IB's functionality. By maintaining a sub-set of the IB's functionality in this manner, the tracker (or sub-trackers) avoids the need to contact the IB on each occasion thereby further reducing the impact on the communication resource within the network. Preferably, the tracker (or sub-trackers) also maintains a list of delivery members that are not to be used, for example due to their lack of up-to-date data content. It is envisaged that the IB may generate the list of disaffected delivery members.

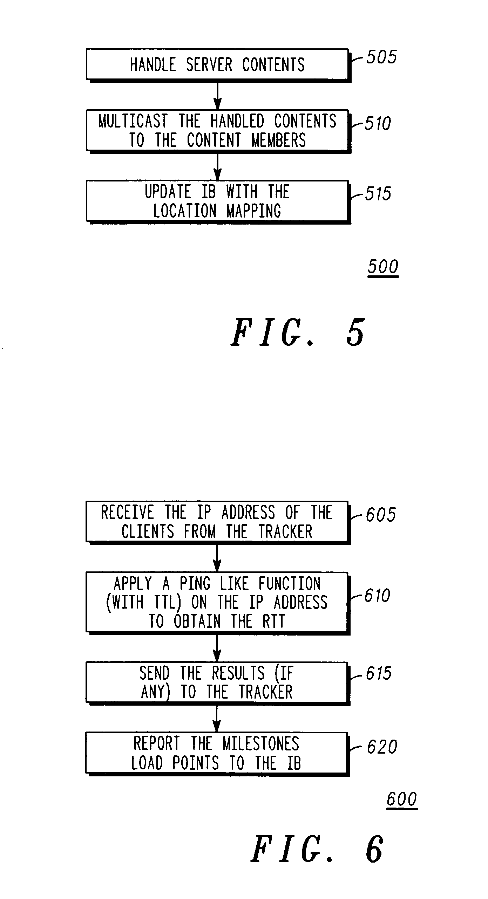

It is within the contemplation of the invention that the tracker 155 may also maintain a subset of the information existing on the information database 170. In this manner, the information database 170 can be constantly updated and used subsequently to make better BC decisions. The process of updating of content/delivery member information with the data content of the content provider is termed publishing, with the processor that implements the updating being termed the publisher. The preferred function of the publisher is described with respect to FIG. 5.

Referring now to FIG. 5, a flowchart 500 of a publisher functionality method is illustrated, in accordance with the preferred embodiment of the present invention. The publisher is preferably installed in the main (central in a network context) server 150 of the content provider (CP), and handles all server data contents, as shown in step 505.

When the server receives any data content updates, the publisher will publish (transmit) them, and/or ND requests, to the appropriate sub-trackers, as shown in step 510. The publisher will also update its data content within its database, together with associated statistics (for example ND measurements) as provided by the sub-trackers and the IB. It is envisaged that such statistics may also include, for example, the least frequently used document by one or more sub-tracker(s).

It is envisaged that the Publisher will also confirm with the tracker, each time there is an update in data content within the primary server, that the tracker has published the updated data content to the sub-trackers of the appropriate delivery members, as in step 515. If, for any reason, the publisher did not succeed in publishing data content immediately to one or more subtrackers, the publisher will preferably report this to the tracker, together with the subtracker's URL. In this case, it is envisaged that the publisher will continue trying to publish any unpublished data to subtrackers that had unsuccessfully received updated data content.

Referring now to FIG. 6, a flowchart 600 of a subtracker functionality method is illustrated, in accordance with the preferred embodiment of the present invention. It is envisaged that at least one sub-tracker is installed in each respective delivery member.

The subtracker receives a client's IP address from the tracker, as shown in step 605. In response to receiving the client's IP address, the subtracker applies a location awareness algorithm to calculate the ND related to that particular client. Such a calculation may be performed using any known distance or delay technique in transmitting messages to/receiving replies from the client. One such technique, for example, incorporates using a 'ping' transmission to the client's IP address, and receiving an automatically transmitted response, as in step 610.

Once a subtracker has calculated the ND, the subtracker forwards the ND results to the tracker of the primary server, as shown in step 615. The tracker gathers ND information relating to the client and analyses the information to determine the best candidate delivery member for the client. It is envisaged that the tracker will also report the information to the IB for subsequent use, as in step 620.

It is within the contemplation of the invention that the sub-tracker may also process information, for example to determine any unused documents contained within its associated delivery member. The sub-tracker may then translate this information into a non-publish command and report this to the corresponding data content publisher.

Furthermore, it is within the contemplation of the invention that the tracker may periodically (or otherwise) perform a synchronisation algorithm to maintain valid, or update, data content for the delivery member. The delivery member, in this context, is a large storage media that preferably runs a sub-tracker daemon.

The Information database is preferably a storage media that tracks sub-network addresses, and the delivery members associated to them. Furthermore, the IB may perform data analysis on the information contained therein, and offer pertinent information to the tracker, to assist in the CR re-direction decision process.

Preferably, the IB is also configured to receive updates from trackers and sub-trackers, analyse the information and update its database(s). In addition, the internal database(s) of the IB may be dynamically updated with new recently introduced sub-trackers. In this manner, the tracker is provided with the necessary information to select the appropriate delivery member from all available delivery members. In the context of the present invention, the term "delivery member" is envisaged to include "content members", for example elements that may store data content, but not necessarily deliver the data content to the client.

It is also within the contemplation of the invention that the IB may also maintain information about the load status of all the sub-trackers to account for load balancing within the network. In monitoring, for example, network and hardware capacity of the delivery members, the inventors of the present invention have recognised that many milestone opportunities for dynamic load balancing may be identified by the network. The IB preferably applies some degree of load balancing, whilst also avoiding congestion and overloading. Milestones may be defined by many factors such as hardware and/or network capacity, or other real time factors such as the day or time of day. In an alternative embodiment, the IB may receive load-balancing updates from the one or more sub-trackers.

Thus, when coupling the aforementioned load balancing option, with maintenance of local statistical data, load balancing can be effected in accordance with a variety of parameters, such as the particular day or time of day, or frequently accessed or non-accessed documents.

It is within the contemplation of the invention that the mapping of a sub-net address to a best candidate may be performed by collecting the address with one or more common sub-net and/or common best candidate delivery member into one field. This field then identifies the sub-net address. In this manner, a reduced amount of information is maintained in the respective databases and transmitted through the network.

A simplified IB within the trackers may be dynamically updated, for example with a list of non-available delivery members. Such a list could be associated with the information concerning the most frequently accessing client, in effect a form of caching of the information of the IB. When the tracker uses a simplified IB, it is preferable to co-ordinate the trackers to perform the critical acts of the system, such as redirecting new requests to the next best candidate of the IB.

Concurrently, it is envisaged that it might signal the tracker that the system reached a predefined threshold, so that no further requests should be forwarded to that member for a period of time. Conversely, it might signal the tracker that it is available.

A significant benefit of the aforementioned content delivery mechanism(s) is that it is transparent to both the client and to the mobile hosts. The content delivery decision algorithms are preferably installed in the IB. Hence, from the IB perspective, the client is always the same. Consequently, the IB does not need to modify any existing authentication algorithms. In particular, control of content delivery has been returned to the content providers. In this manner, data may be more easily provided to focused users, for example University users, in contrast to non-focused users such as people in say, a cyber café.

It will be understood that the QoS-based architecture with dynamic content allocation/delivery described above provides at least the following advantages:
(i) Improved QoS on the client side; particularly with regard to:
   (a) Reduced latency,
   (b) Higher bandwidth,
   (c) Network load optimisation;
(ii) Dynamic selection of best delivery member based on:
   (a) Network distance to client,
   (b) Delivery member load, and
   (c) Server policy;
(iii) Scalability;
(iv) Transparency, in that:
   (a) No modification is needed in the client side,
   (b) No modification is needed in the IP infrastructure, which makes it easier to deploy, and less expensive,
   (c) No modification is needed to any existing protocols,
   (d) It is compatible with existing solutions such as caching,
   (e) It is transparent to mobile IP applications; and
(v) It is a complete and robust solution for the delivery of data to the end-user.

Whilst the specific and preferred implementations of the embodiments of the present invention are described above, it is clear that one skilled in the art could readily apply variations and modifications of such inventive concepts.

Thus, an improved communication system, an improved data content allocation/delivery mechanism has been described wherein the abovementioned disadvantages associated with prior art arrangements have been substantially alleviated.

## Claims

1. A data network (100, 200, 300) for dynamically delivering data content to a client (112), the data network comprising:
a core network (110) for routing communication to and/or from the client (112);
a server (150), operably coupled to the core network (110), having data content stored therein; and
a plurality of distributed delivery members (130, 140) operably coupled to the core network and/or server (150) to facilitate data communication to the client (112);
the data network (100, 200, 300) **characterised by**:
a tracker 155, contained within, or operably coupled to, said server (150); and
one or more subtrackers (135, 145), contained within, or operably coupled to, said plurality of distributed delivery members (130, 140);
wherein, in response to receiving a data content request by said client (112) said tracker (155) requests a number of said subtrackers (135, 145) to calculate a network distance from a respective delivery member (130, 140) to said client (112) to determine a preferred candidate delivery member (130, 140) to deliver said requested data content to said client (112).

2. The data network (100, 200, 300) according to Claim 1, further **characterised by** the tracker (155) redirecting said client request to the selected preferred candidate delivery member (130, 140).

3. The data network (100, 200, 300) according to Claim 1 or Claim 2, further **characterised by**:
a publisher (160) contained within, or operably coupled to, said server 150 such that said publisher maintains a database of the data contents contained in one or more said delivery members (130, 140) and
transmits data content requested by said client to one or more delivery members (130, 140) in response to receiving said client request.

4. The data network (100, 200, 300) according to Claim 1 or Claim 2 or Claim 3, wherein said network distance is calculated depending upon a network type and/or one or more network protocols employed within said core network (110).

5. The data network (100, 200, 300) according to Claim 4, wherein said network distance is calculated using a ping process, for example to determine a round-trip delay for a data packet to travel from a source node to a destination node and back to the source node, or calculating a number of hops, gateways or routers between a source node and a destination node.

6. The data network (100, 200, 300) according to Claim 3, Claim 4 or Claim 5, wherein if said publisher fails to publish data content to said one or more subtrackers, said publisher reports the failure to said tracker, preferably with said one or more subtracker's address.

7. The data network (100, 200, 300) according to Claim 6, further **characterised by** said publisher continuing to try to publish any unpublished data to said one or more subtrackers that had unsuccessfully received updated data content.

8. The data network (100, 200, 300) according to any one of preceding Claims 3 to 7, wherein said one or more sub-trackers determines any unused documents contained within its associated delivery member and, in response to such a determination, transmits a non-publish command to said publisher.

9. The data network (100, 200, 300) according to any one of the preceding Claims, further **characterised by**:
an information database (170), operably coupled to said server (150), to maintain a list of client addresses and delivery members (130, 140) associated thereto.

10. The data network (100, 200, 300) according to Claim 9, wherein said tracker (155) extracts a client address from said client request and searches (180) said information database (170) for information on said client (120) to determine whether to request said number of said subtrackers (135, 145) to calculate a network distance to said client (120).

11. The data network (100, 200, 300) according to Claim 10, wherein said tracker (155) transmits one or more queries (220) to said number of subtrackers (135, 145) if no data is found on said client (120).

12. The data network (100, 200, 300) according to any one of the preceding Claims, further **characterised by** said number of said subtrackers (135, 145) calculating a network distance to said client (120) by transmitting at least one data packet to said client, for example a data packet having a low time-to-live value to limit the number of subtrackers used in the process.

13. The data network (100, 200, 300) according to any one of the preceding Claims, further **characterised by** said number of said subtrackers (135, 145) transmitting load information for an associated delivery member (130, 140) to said tracker (155).

14. The data network (100, 200, 300) according to any one of the preceding Claims, further **characterised by** said tracker (155) performing a test publisher precautions process to avoid any transitional period between receiving a client request for a document and publishing that document.

15. The data network (100, 200, 300) according to Claim 14, further **characterised by** the test publisher precautions process indicating whether a non-published document is contained within the client requested documents.

16. The data network (100, 200, 300) according to any one of the preceding Claims, further **characterised by** said tracker (155) or any one or more of said subtrackers maintaining a sub-set of the information database's functionality.

17. The data network (100, 200, 300) according to any one of preceding Claims 9 to 16, further **characterised by** said tracker (155) informing its information database (445) of said network distance results received from the one or more sub-trackers.

18. The data network (100, 200, 300) according to any one of the preceding Claims, further **characterised by** said server (150) mapping a number of sub-net address to said preferred candidate delivery member (130, 140) by collecting addresses with common sub-nets and/or common preferred candidate delivery members into a data field identified by its sub-net address.

19. The data network (100, 200, 300) according to Claim 18 when dependent upon Claim 9, further **characterised by** said sub-net addresses being stored on said information database.

20. The data network (100, 200, 300) according to any one of the preceding Claims, wherein said data network (100, 200, 300) is an application level QoS-based data network.

21. A storage medium storing processor-implementable instructions for controlling a processor to carry out the method of any of claims 1 to 20.

22. A method of delivering data content to a client (400), the method comprising the step of:
receiving a data content request from a client (112);
the method **characterised by** the steps of:
requesting a number of subtrackers (135, 145) to calculate a network distance from an associated delivery member (130, 140) or said subtracker (135, 145) to said client (112); and
determining a preferred candidate delivery member (130, 140) to deliver said requested data content to said client (112) in response to said network distance calculation(s).

23. The method of delivering data content to a client (400) according to Claim 22, further **characterised by** the step of:
re-directing said client request to the selected preferred candidate delivery member (130, 140).

24. The method of delivering data content to a client (400) according to Claim 22 or Claim 23, the method further **characterised by** the step of:
transmitting said data content requested by said client to said delivery members (130, 140) in response to receiving said client request.

25. The method of delivering data content to a client (400) according to any of Claims 22 to 24, wherein said network distance is calculated depending upon a network type and/or one or more network protocols.

26. The method of delivering data content to a client (400) according to any of preceding Claims 22 to 25, the method further **characterised by** the step of:
calculating said network distance using one of:
a ping process, for example to determine a round-trip delay for a data packet to travel from a source node to a destination node and back to the source node, or
calculating a number of hops, gateways or routers between a source node and a destination node.

27. The method of delivering data content to a client (400) according to any of preceding Claims 22 to 26, the method further **characterised by** the steps of:
determining any unused documents contained within a delivery member;
and, in response to such a determination,
transmitting a non-publish command to a server.

28. The method of delivering data content to a client (400) according to any of preceding Claims 22 to 27, the method further **characterised by** the step of:
maintaining a list of client addresses, and delivery members (130, 140) associated thereto, at a server.

29. The method of delivering data content to a client (400) according to Claim 28, the method further **characterised by** the steps of:
extracting a client address from said client request; and
searching (180) said list of client addresses for information on said client (120) to determine whether to request a calculation of a network distance to said client (120).

30. The method of delivering data content to a client (400) according to Claim 29, the method further **characterised by** the step of:
transmitting one or more queries (220) to said delivery members (130, 140) if no data is determined that relates to said client (120) from said list of client addresses.

31. The method of delivering data content to a client (400) according to any of preceding Claims 22 to 30, the method further **characterised by** the step of:
calculating a network distance to said client (120) by transmitting at least one data packet to said client, for example a data packet having a low time-to-live value to limit the number of subtrackers used in the process.

32. The method of delivering data content to a client (400) according to any of preceding Claims 22 to 31, the method further **characterised by** the step of:
transmitting load information for an associated delivery member (130, 140) to a server to be used in determining a preferred candidate delivery member.

33. The method of delivering data content to a client (400) according to any of preceding Claims 22 to 32, the method further **characterised by** the step of:
performing a test publisher precautions process to avoid any transitional period between receiving a client request for a document and publishing that document.

34. The method of delivering data content to a client (400) according to Claim 33, wherein the step of performing a test publisher precautions process indicates whether a non-published document is contained within the client request documents.

35. The method of delivering data content to a client (400) according to any of preceding Claims 22 to 34, the method further **characterised by** the step of:
maintaining a sub-set of a server's functionality at one or more delivery members (130, 140).

36. The method of delivering data content to a client (400) according to any of preceding Claims 22 to 34, the method further **characterised by** the step of:
mapping a number of sub-net addresses to said preferred candidate delivery member (130, 140) by collecting addresses with common sub-nets and/or common preferred candidate delivery members into a data field identified by its sub-net address.

37. A server (150) adapted to operate in the data network (100, 200, 300) according to any one of Claims 1 to 20 or to perform any of the method steps of Claim 22 to 36.

38. A delivery member (130, 140) adapted to operate in the data network (100, 200, 300) according to any one of Claims 1 to 20 or to perform any of the method steps of Claim 22 to 36.

39. A tracker (155) adapted to operate in the data network (100, 200, 300) according to any one of Claims 1 to 20 or to perform any of the method steps of Claim 22 to 36.

40. A publisher (155) adapted to operate in the data network (100, 200, 300) according to any one of Claims 1 to 20 or to perform any of the method steps of Claim 22 to 36.

41. An information database (170) adapted to operate in the data network (100, 200, 300) according to any one of Claims 1 to 20 or to perform any of the method steps of Claim 22 to 36.

42. A subtracker (135, 145) adapted to operate in the data network (100, 200, 300) according to any one of Claims 1 to 20 or to perform any of the method steps of Claim 22 to 36.
